(19) Europäisches Patentamt
European Patent Office
Office européen des brevets

(11) **EP 4 723 240 A1**

(12) **EUROPEAN PATENT APPLICATION**
published in accordance with Art. 153(4) EPC

(43) Date of publication:
08.04.2026 Bulletin 2026/15

(21) Application number: 24815792.7

(22) Date of filing: 23.05.2024

(51) International Patent Classification (IPC):
*H01M 4/583* (2010.01)    *H01M 4/36* (2006.01)
*C01B 32/21* (2017.01)    *H01M 4/133* (2010.01)
*H01M 10/052* (2010.01)    *H01M 4/02* (2006.01)

(52) Cooperative Patent Classification (CPC):
Y02E 60/10

(86) International application number:
PCT/KR2024/007026

(87) International publication number:
WO 2024/248416 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.06.2023 KR 20230070603

(71) Applicant: Posco Future M Co., Ltd.
Pohang-si, Gyeongsangbuk-do 37918 (KR)

(72) Inventors:
• AHN, Kihong
Sejong 30153 (KR)
• LEE, Kyoungmuk
Cheonan-si, Chungcheongnam-do 31207 (KR)

• SHIN, Myoungsoo
Cheongju-si, Chungcheongbuk-do 28165 (KR)
• LEE, Se Hyun
Cheonan-si, Chungcheongnam-do 31131 (KR)
• KANG, Su Hee
Cheonan-si, Chungcheongnam-do 31177 (KR)
• MIN, Jin Wook
Anyang-si, Gyeonggi-do 14052 (KR)
• KWON, Haejun
Cheonan-si, Chungcheongnam-do 31197 (KR)
• JUNG, Su Yeon
Cheonan-si, Chungcheongnam-do 31197 (KR)
• KIM, Sumin
Cheonan-si, Chungcheongnam-do 31197 (KR)

(74) Representative: Meissner Bolte Partnerschaft
mbB
Patentanwälte Rechtsanwälte
Postfach 86 06 24
81633 München (DE)

(54) **ANODE ACTIVE MATERIAL FOR LITHIUM SECONDARY BATTERY, MANUFACTURING METHOD THEREFOR AND LITHIUM SECONDARY BATTERY COMPRISING SAME**

(57) The present invention relates to a negative electrode active material for a lithium secondary battery, comprising natural graphite, wherein the natural graphite satisfies the following Equation 1.

[Equation 1]

$$P_{1.7} - P_{1.3} \geq 1200 \ \text{kg·f/cm}^2$$

In Equation 1, $P_{1.7}$ denotes an applied pressure at which the pellet density of the negative electrode active material becomes 1.7 g/cc, and $P_{1.3}$ denotes an applied pressure at which the pellet density of the negative electrode active material becomes 1.3 g/cc.

EP 4 723 240 A1

**Description**

[Technical Field]

The present invention relates to a negative electrode active material for a lithium secondary battery, a method for manufacturing the same, and a lithium secondary battery including the same, and more particularly, to a negative electrode active material for a lithium secondary battery comprising natural graphite, a method for manufacturing the same, and a lithium secondary battery including the same.

[Background Art]

With increasing concerns over environmental pollution and rising energy costs caused by the depletion of fossil fuels, eco-friendly alternative energy sources have become essential and indispensable for future life.

In particular, as the development of technology for mobile devices and the corresponding demand have increased, the demand for secondary batteries as an energy source has rapidly increased, and recently, the use of secondary batteries as power sources for electric vehicles (xEVs) and energy storage systems (ESSs) has been realized.

Although lithium metal had conventionally been used as the negative electrode of such secondary batteries, the formation of dendrites, which may cause internal short circuits and potential explosion hazards, has become problematic. Consequently, the use of carbon-based active materials capable of reversibly intercalating and deintercalating lithium ions while maintaining structural and electrical properties has emerged.

Various types of carbon-based materials such as artificial graphite, natural graphite, and hard carbon have been applied as the carbon-based active materials, and among them, graphite-based active materials are the most widely used due to their excellent reversibility, which ensures the lifespan characteristics of lithium secondary batteries. Since graphite-based active materials have a low discharge potential of -0.2 V versus lithium, batteries employing graphite-based active materials can exhibit a high discharge voltage of 3.6 V, thereby providing significant advantages in terms of energy density of lithium batteries.

Among these materials, natural graphite, in particular, exhibits higher output and capacity than artificial graphite and other carbon-based active materials, and has excellent adhesion, enabling a reduction in the amount of binder used and the realization of high-capacity and high-density negative electrodes.

In particular, lithium secondary batteries used in electric vehicles require fast-charging characteristics capable of being charged in a short time, as well as lifespan characteristics in which discharge capacity is well maintained even after repeated charge and discharge cycles. Therefore, there is a need for technological development that can further improve the charging output characteristics and lifespan characteristics of conventional natural graphite negative electrode active materials.

[Detailed Description of the Invention]

[Technical Problem]

Accordingly, one object of the present invention is to provide a negative electrode active material for a lithium secondary battery having improved charging output characteristics and lifespan characteristics, a method for manufacturing the same, and a lithium secondary battery including the same.

[Technical Solution]

According to one embodiment of the present invention, there is provided a negative electrode active material for a lithium secondary battery comprising natural graphite, wherein the natural graphite satisfies the following Equation 1.

$$[\text{Equation 1}]$$

$$P_{1.7} - P_{1.3} \geq 1200 \ \text{kg·f/cm}^2$$

In Equation 1, $P_{1.7}$ denotes an applied pressure at which the pellet density becomes 1.7 g/cc, and $P_{1.3}$ denotes an applied pressure at which the pellet density becomes 1.3 g/cc.

The natural graphite may satisfy the following Equation 2.

[Equation 2]

$$P_{1.6} - P_{1.3} \geq 850 \ kg \cdot f/cm^2$$

In Equation 2, $P_{1.6}$ denotes an applied pressure at which the pellet density becomes 1.6 g/cc, and $P_{1.3}$ denotes an applied pressure at which the pellet density becomes 1.3 g/cc.

The natural graphite may satisfy the following Equation 3.

[Equation 3]

$$P_{1.5} - P_{1.3} \geq 550 \ kg \cdot f/cm^2$$

In Equation 3, $P_{1.5}$ denotes an applied pressure at which the pellet density becomes 1.5 g/cc, and $P_{1.3}$ denotes an applied pressure at which the pellet density becomes 1.3 g/cc.

The natural graphite may satisfy the following Equation 4.

[Equation 4]

$$P_{1.4} - P_{1.3} \geq 250 \ kg \cdot f/cm^2$$

In Equation 4, $P_{1.4}$ denotes an applied pressure at which the pellet density becomes 1.4 g/cc, and $P_{1.3}$ denotes an applied pressure at which the pellet density becomes 1.3 g/cc.

The natural graphite may have an orientation peak intensity ratio ($I_{110}/I_{004}$) of 0.50 or greater in an XRD pattern analysis.

The natural graphite may have a sphericity of 0.85 or greater.

The negative electrode active material for a lithium secondary battery may further include a coating layer disposed on the natural graphite and containing a low-crystallinity carbon material. The low-crystallinity carbon material may be soft carbon, hard carbon, or a combination thereof. The coating layer may be included in an amount of 1 to 20 wt% based on the total weight of the natural graphite.

The negative electrode active material for a lithium secondary battery may have a tap density of 1.1 g/cm$^3$ or greater.

The negative electrode active material for a lithium secondary battery may have a SPAN value of 1 to 1.5.

The negative electrode active material for a lithium secondary battery may have an average particle diameter (D50) of 12 to 20 $\mu$m.

Another embodiment of the present invention provides a method for manufacturing a negative electrode active material for a lithium secondary battery, the method comprising: preparing a natural graphite powder; oxidatively treating the natural graphite powder; and performing high-density spheronization of the oxidatively treated natural graphite powder.

The oxidative treatment may be performed at a temperature of 500°C to 700°C.

The oxidative treatment may be performed for 1 to 5 hours.

The oxidative treatment may be performed in an air or oxygen atmosphere.

The high-density spheronization may be performed by a mechanical spheronization method.

The mechanical spheronization method may be performed through one or more selected from the group consisting of air classifying milling, spheronizing milling, grinding milling, mechanofusion milling, planetary milling, hybridization milling, shape milling, and high-speed milling.

The method may further include, after performing high-density spheronization on the oxidatively treated natural graphite powder, mixing a precursor of a low-crystallinity carbon material and then performing heat treatment to form a coating layer containing the low-crystallinity carbon material.

The precursor of the low-crystallinity carbon material may be selected from petroleum pitch, coal pitch, mesophase pitch, heavy oil, light oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

Another embodiment of the present invention provides a negative electrode for a lithium secondary battery comprising the aforementioned negative electrode active material.

Another embodiment of the present invention provides a lithium secondary battery comprising the negative electrode.

[Effects of the Invention]

The negative electrode active material for a lithium secondary battery according to one embodiment of the present invention can improve the charging output characteristics and lifespan characteristics of the battery.

[Modes for Carrying Out the Invention]

The terms such as first, second, and third are used to describe various parts, components, regions, layers, and/or sections, but are not limited thereto. These terms are merely used to distinguish one part, component, region, layer, or section from another part, component, region, layer, or section. Therefore, a first part, component, region, layer, or section described below may be referred to as a second part, component, region, layer, or section within the scope of the present invention without departing from the spirit of the invention.

Technical terms used herein are intended only to describe specific embodiments and are not intended to limit the present invention. Singular forms used herein include plural forms unless the context clearly indicates otherwise. The term "comprising/including/containing" as used in the specification, specifies the presence of stated features, regions, integers, steps, operations, elements, and/or components, and does not preclude the presence or addition of one or more other features, regions, integers, steps, operations, elements, and/or components.

When a part is referred to as being "on" or "above/over" another part, it may be directly on or over the other part, or one or more intervening parts may be present therebetween. In contrast, when a part is referred to as being "directly on" or "directly over/above" another part, no intervening part is present between them.

Unless otherwise defined, all terms including technical and scientific terms used herein have the same meaning as commonly understood by one of ordinary skill in the art to which the present invention pertains. Terms generally defined in dictionaries are to be interpreted as consistent with their meanings in the relevant technical field and with the present disclosure, and are not to be interpreted in an idealized or overly formal sense unless expressly defined herein.

Furthermore, unless specifically stated otherwise, "%" refers to weight percent (wt%), and 1 ppm means 0.0001 wt%.

In this specification, the expression "combinations thereof" recited in Markush-type expressions refers to one or more mixtures or combinations selected from the group of components described in the Markush expression, and means that one or more components selected from the group are encompassed.

Hereinafter, embodiments of the present invention will be described in detail so that those skilled in the art to which the present invention pertains can readily practice the invention. However, the present invention may be implemented in many different forms and is not limited to the embodiments described herein.

### 1. Negative Electrode Active Material

The inventors of the present invention have repeatedly conducted research to improve both the charging output characteristics and lifespan characteristics of natural graphite negative electrode active materials, and as a result, discovered that the above effects can be desirably achieved when the negative electrode active material satisfies the physical properties defined in Equation 1 below, thereby completing the present invention.

According to one embodiment of the present invention, there is provided a negative electrode active material for a lithium secondary battery comprising natural graphite, wherein the natural graphite satisfies the following Equation 1.

[Equation 1]

$$P_{1.7} - P_{1.3} \geq 1200 \ \text{kg} \cdot \text{f/cm}^2$$

In Equation 1, $P_{1.7}$ denotes an applied pressure at which the pellet density of the negative electrode active material becomes 1.7 g/cc, and $P_{1.3}$ denotes an applied pressure at which the pellet density of the negative electrode active material becomes 1.3 g/cc.

In this specification, the term "pellet density" refers to the density of an active material powder measured when a predetermined mass of the active material powder sample is placed into a cylinder having a predetermined area, and a load is applied in the height direction to apply pressure. In other words, Equation 1 represents an additional applied pressure required to increase the pellet density of the active material powder from 1.3 g/cc to 1.7 g/cc, and the larger the additional applied pressure, the higher the rigidity of the active material powder. That is, the natural graphite according to the present invention has a very high particle strength.

As the negative electrode active material for a lithium secondary battery according to one embodiment of the present invention satisfies Equation 1, both the charging output characteristics and lifespan characteristics of the battery can be improved.

More specifically, the inventors have discovered that natural graphite active materials having high particle strength to the extent of satisfying Equation 1 can be more readily obtained by oxidatively treating natural graphite powder and then performing high-density spheronization.

When the natural graphite powder is oxidatively treated, carbon atoms on the graphite surface react with oxygen to form carbon dioxide, and parts of the planes forming the layered graphite structure are decomposed, thereby forming new lithium-ion channels. Accordingly, lithium ions can move through both (i) the original lithium-ion pathways parallel to the planes forming the layered graphite structure and (ii) the newly formed lithium-ion channels generated through the oxidation process, resulting in improved charging output characteristics of the battery. Additionally, when the natural graphite is subjected to high-density spheronization, the orientation of the graphite-layer edge portions inside the graphite particle may become diversified, allowing smoother lithium-ion movement. As a result, the charging output characteristics of the battery may be further improved.

Meanwhile, the inventors have also discovered that when the negative electrode active material satisfies Equation 1, not only the charging output characteristics but also the lifespan characteristics of the battery are improved. This is believed to be because the oxidation-high-density-spheronization process maximizes the effect of high-density spheronization and minimizes internal porosity of the graphite, thereby reducing irreversible lithium consumption caused by additional SEI formation at the electrolyte/graphite interface during cycling, which is known to be a major mechanism of capacity degradation.

More specifically, the Equation 1 value of the natural graphite may be 1250 kg·f/cm$^2$ or greater.

In one embodiment, the natural graphite may satisfy the following Equation 2.

[Equation 2]

$$P_{1.6} - P_{1.3} \geq 850 \text{ kg·f/cm}^2$$

In Equation 2, $P_{1.6}$ denotes an applied pressure at which the pellet density becomes 1.6 g/cc, and $P_{1.3}$ denotes an applied pressure at which the pellet density becomes 1.3 g/cc. More specifically, the Equation 2 value of the natural graphite may be 870 kg·f/cm$^2$ or greater.

In one embodiment, the natural graphite may satisfy the following Equation 3.

[Equation 3]

$$P_{1.5} - P_{1.3} \geq 550 \text{ kg·f/cm}^2$$

In Equation 3, $P_{1.5}$ denotes an applied pressure at which the pellet density becomes 1.5 g/cc, and $P_{1.3}$ denotes an applied pressure at which the pellet density becomes 1.3 g/cc. More specifically, the Equation 3 value of the natural graphite may be 570 kg·f/cm$^2$ or greater.

In one embodiment, the natural graphite may satisfy the following Equation 4.

[Equation 4]

$$P_{1.4} - P_{1.3} \geq 250 \text{ kg·f/cm}^2$$

In Equation 4, $P_{1.4}$ denotes an applied pressure at which the pellet density becomes 1.4 g/cc, and $P_{1.3}$ denotes an applied pressure at which the pellet density becomes 1.3 g/cc. More specifically, the Equation 4 value of the natural graphite may be 280 kg·f/cm$^2$ or greater.

The technical significance of satisfying Equations 2 through 4 is identical to that described above for Equation 1 and will not be repeated.

Meanwhile, the natural graphite may have an orientation peak intensity ratio ($I_{110}/I_{004}$) of 0.50 or greater, more specifically 0.51 or greater, and 0.70 or less, in an XRD pattern analysis. In this specification, the orientation peak intensity ratio ($I_{110}/I_{004}$) refers to a value obtained by measuring the (110) plane and the (004) plane of the graphite particle using XRD, integrating the peak intensities of the (110) plane and the (004) plane, and dividing the integrated areas. Specifically, the (110) plane corresponds to a range of $76.5° < 2\theta < 78.5°$, and the (004) plane corresponds to a range of $53.5° < 2\theta < 56.0°$, where $2\theta$ denotes the diffraction angle.

When the natural graphite satisfies the above range of the orientation peak intensity ratio ($I_{110}/I_{004}$), the orientation of the graphite-layer edge portions inside the graphite particle may become diversified, allowing smoother lithium-ion movement and thereby improving the charging output characteristics of the battery.

The natural graphite may have a sphericity of 0.85 or greater, and more specifically 0.90 or greater.

In this specification, the term "sphericity" refers to a numerical value indicating how close a particle is to a spherical shape, and is defined as a value obtained by dividing the circumference of a circle having the same area as the projected particle image by the actual circumference of the projected particle image, measured using an optical image acquisition analyzer (Fluid Imaging Technologies, Flowcam 8100) and analysis software (Visual Spreadsheet).

When the natural graphite satisfies the above-described sphericity range, the density and orientation of the spherical natural graphite particles increase together, enabling uniform surface coating when applied as a negative electrode active material, improving the electrode energy density, and enhancing the battery output characteristics.

The above-described ranges of the orientation peak intensity ratio ($I_{110}/I_{004}$) and the sphericity may be more readily obtained through a high-density spheronization process in the manufacturing method.

The negative electrode active material for a lithium secondary battery may further include a coating layer disposed on the natural graphite and containing a low-crystallinity carbon material. By additionally providing the coating layer on the surface of the natural graphite, side reactions between the natural graphite and the electrolyte may be suppressed, thereby reducing irreversible reactions, improving lithium-ion conductivity, and enhancing electrochemical properties such as output and lifespan of the battery.

The low-crystallinity carbon material is not particularly limited. For example, the low-crystallinity carbon material may be soft carbon, hard carbon, or a combination thereof, but is not limited thereto.

The soft carbon may be an amorphous carbon-based material obtained by carbonizing coke, needle coke, coal pitch, petroleum pitch, mesophase pitch, or a combination thereof.

The hard carbon may be an amorphous carbon-based material obtained by pyrolyzing phenol resin, furan resin, furfuryl alcohol, polyacrylonitrile, styrene, polyimide, epoxy resin, or a combination thereof.

The coating layer may be included in an amount of 1 to 20 wt% based on the total weight of the natural graphite, and more specifically, in an amount of 2 to 16 wt%, 3 to 12 wt%, or 4 to 10 wt%.

When the content of the coating layer satisfies the above range, the natural graphite and the coating layer can be effectively integrated, thereby reducing side reactions and enhancing lithium-ion conductivity, which improves the output and lifespan characteristics of the lithium secondary battery.

The negative electrode active material for a lithium secondary battery may have a tap density of 1.1 g/cm$^3$ or greater.

When the tap density of the negative electrode active material satisfies the above range, the electrode energy density can be improved.

In this specification, the tap density refers to a value measured using a commonly employed method in the art to determine the packing degree of a sample per unit volume. For example, it may be measured according to the instrument and method specified in ASTM B527, in which the sample placed in a measurement container is mechanically tapped from a predetermined height a predetermined number of times, and the density (sample weight/volume) is calculated based on the change in volume after tapping.

The negative electrode active material for a lithium secondary battery may have a SPAN value of 1 to 1.5.

When the SPAN value of the negative electrode active material satisfies the above range, advantages such as a reduction in electrode resistance due to suppression of fines and coarse particles and an improvement in swelling characteristics due to reduced electrode expansion can be obtained.

More specifically, when the SPAN value is excessively small, a relatively broad particle size distribution may cause localized electrode expansion and related issues, whereas when the SPAN value is excessively large, problems such as reduced rollability of the electrode and increased porosity in the electrode may arise.

In this specification, the SPAN value refers to a value obtained by calculating [D90 - D10] / D50, where D90, D50, and D10 are defined as particle diameters corresponding to 90%, 50%, and 10% of the cumulative volume in the particle size distribution curve, respectively. These particle diameters may be measured, for example, by using a laser diffraction method.

The negative electrode active material for a lithium secondary battery may have an average particle diameter (D50) of 12 to 20 μm.

When the average particle diameter of the negative electrode active material satisfies the above range, advantages such as securing maximum electrode adhesion and rollability, as well as ensuring electrochemical reversible capacity and achieving high initial efficiency, may be obtained. More specifically, if the average particle diameter is too small, the initial charge/discharge coulombic efficiency may decrease due to increased specific surface area, and if the average particle diameter is too large, electrode resistance and electrode expansion ratio may increase.

In this specification, the average particle diameter (D50) refers to a particle diameter corresponding to 50% of the cumulative volume in the particle size distribution curve.

## 2. Method for Manufacturing the Negative Electrode Active Material

Another embodiment of the present invention provides a method for manufacturing a negative electrode active material for a lithium secondary battery, the method comprising: preparing a natural graphite powder; oxidatively treating the natural graphite powder; and performing high-density spheronization on the oxidatively treated natural graphite powder.

Hereinafter, the method for manufacturing a negative electrode active material for a lithium secondary battery according to another embodiment of the present invention will be described step-by-step.

First, natural graphite powder is prepared.

The prepared natural graphite may be a natural graphite raw powder that has undergone primary spheronization.

The primary spheronization may be performed to spheronize plate-shaped natural graphite raw powder by using a general method for forming a spherical graphite material for use in manufacturing a negative electrode active material.

Next, the natural graphite powder is oxidatively treated.

Through the oxidative treatment, carbon atoms on the graphite surface react with oxygen to form carbon dioxide, and some of the planes forming the layered graphite structure are decomposed, thereby forming new lithium-ion channels. In addition, as described in the high-density spheronization process below, the oxidative treatment functions to further increase the particle strength of the active material.

The oxidative treatment may be performed at a temperature of 500°C to 700°C. If the oxidation temperature is too low, the oxidation reaction may not sufficiently proceed, resulting in insufficient oxidation effects as described above, whereas if the oxidation temperature is too high, excessive oxidation of the graphite surface layer may occur, resulting in an increase in surface roughness and specific surface area, which may decrease reversible discharge capacity and initial charge/discharge coulombic efficiency.

The oxidative treatment may be performed for 1 to 5 hours. If the oxidation time is too short, the oxidation effect described above may be insufficient, whereas if the oxidation time is too long, excessive oxidation of the graphite surface layer may occur, leading to increased surface roughness and specific surface area, and decreased reversible discharge capacity and initial coulombic efficiency.

The oxidative treatment may be performed in an air or oxygen atmosphere.

Next, the oxidatively treated natural graphite powder is subjected to high-density spheronization.

The high-density spheronization may be performed by a mechanical spheronization method.

The mechanical spheronization method may be performed using one or more selected from the group consisting of air classifying milling, spheronizing milling, grinding milling, mechanofusion milling, planetary milling, hybridization milling, shape milling, and high-speed milling.

The secondary re-spheronization step may be performed at a rotational speed of 500 to 4000 rpm, and more specifically at 700 to 2000 rpm or 800 to 1500 rpm. When spheronization is performed at the above rotational speeds, cracking and breakage of the graphite raw material can be minimized, and natural graphite having an appropriate sphericity can be formed.

The secondary re-spheronization step may be performed for 5 to 40 minutes, and more specifically for 8 to 25 minutes or 10 to 20 minutes. When spheronization is performed for the above time range, natural graphite having an appropriate sphericity can be formed.

In particular, in the manufacturing method of the negative electrode active material according to the present invention, as high-density spheronization proceeds after oxidative treatment, the particle strength of the negative electrode active material becomes stronger than when only high-density spheronization is performed, and the internal graphite particle structure becomes more compact. Accordingly, the values of Equations 1 to 4 described above may become larger. This is believed to be because portions of the planes forming the layered graphite structure are decomposed through oxidative treatment, and the resulting shortened graphite planes are more densely agglomerated during high-density spheronization.

Through the oxidative treatment and high-density spheronization processes, physical properties such as the values of Equations 1 to 4, the orientation peak intensity ratio ($I_{110}/I_{004}$), and the sphericity of the resulting negative electrode active material can be appropriately obtained within the ranges defined by the present invention.

Next, after performing high-density spheronization on the oxidatively treated natural graphite powder, the method may further include mixing a precursor of a low-crystallinity carbon material and then performing heat treatment to form a coating layer containing the low-crystallinity carbon material.

The precursor of the low-crystallinity carbon material may be selected from petroleum pitch, coal pitch, mesophase pitch, heavy oil, light oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

The mixing may be performed by a mechanical mixing method.

The mechanical mixing method may be performed using one or more selected from the group consisting of ball milling, mechanofusion milling, shaker milling, planetary milling, attritor milling, shape milling, nauta milling, nobilta milling, high-speed mixing, paddle mixing, ribbon mixing, henschel mixing, cone-type mixing, thinky mixing, homo mixing, and stirring.

The mechanical mixing may be performed at a rotational speed of 500 to 3000 rpm.

The heat treatment may be performed in an atmosphere of hydrogen, nitrogen, argon, or a mixed gas thereof, at a temperature of 600°C to 1500°C.

### 3. Negative Electrode and Lithium Secondary Battery

Another embodiment of the present invention provides a negative electrode for a lithium secondary battery comprising the aforementioned negative electrode active material.

The negative electrode for a lithium secondary battery according to another embodiment of the present invention may more specifically include: a negative electrode current collector; and a negative electrode active material layer disposed on the negative electrode current collector and comprising the aforementioned negative electrode active material.

The negative electrode current collector is not particularly limited as long as it has high conductivity without causing chemical changes in the battery. Examples include copper, stainless steel, aluminum, nickel, titanium, sintered carbon, copper or stainless steel surface-treated with carbon, nickel, titanium, or silver, aluminum-cadmium alloy, and the like.

The negative electrode current collector may typically have a thickness of 3 to 500 $\mu$m, and similar to the positive electrode current collector, fine surface irregularities may be formed on its surface to enhance adhesion of the negative electrode active material.

It may be used in various forms such as films, sheets, foils, nets, porous bodies, foams, or non-woven fabrics.

The negative electrode active material layer may optionally include a binder and/or a conductive material together with the negative electrode active material.

The binder serves to improve adhesion between the negative electrode active material particles and adhesion between the negative electrode active material and the negative electrode current collector.

Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more of these may be used. The binder may be included in an amount of 1 to 30 wt% based on the total weight of the negative electrode active material layer.

The conductive material is used to impart conductivity to the electrode, and may be used without particular limitation as long as it has electronic conductivity without causing chemical changes in the battery. Specific examples include graphite such as natural graphite or artificial graphite; carbon-based materials such as carbon black, acetylene black, ketjen black, channel black, furnace black, lamp black, thermal black, or carbon fibers; metal powders or metal fibers such as copper, nickel, or silver; conductive whiskers such as zinc oxide or potassium titanate; conductive metal oxides such as titanium oxide; or conductive polymers such as polyphenylene derivatives, and mixtures of one or more of these may be used.

The conductive material may typically be included in an amount of 1 to 30 wt% based on the total weight of the negative electrode active material layer.

The negative electrode for a lithium secondary battery according to one embodiment of the present invention may be manufactured according to a conventional method for preparing a negative electrode, except that the above-described negative electrode active material is used.

Specifically, the negative electrode may be manufactured by applying a composition for forming a negative electrode active material layer, which includes the aforementioned negative electrode active material and optionally a binder, conductive material, and solvent, onto the negative electrode current collector, followed by rolling and drying.

In this case, the types and contents of the negative electrode active material, binder, and conductive material are as described above.

The solvent may be one commonly used in the art, including dimethyl sulfoxide (DMSO), isopropyl alcohol, N-methylpyrrolidone (NMP), acetone, or water, and one or a mixture of two or more thereof may be used.

The amount of solvent used should be sufficient to dissolve or disperse the negative electrode active material, conductive material, and binder, taking into account slurry coating thickness and manufacturing yield, and to provide a viscosity that ensures excellent coating uniformity during electrode fabrication.

Alternatively, the negative electrode may be manufactured by casting the composition for forming the negative electrode active material layer onto a separate support, peeling the resulting film from the support, and laminating the film onto the negative electrode current collector.

Another embodiment of the present invention provides a lithium secondary battery comprising the aforementioned negative electrode.

The lithium secondary battery according to another embodiment of the present invention may more specifically include a positive electrode, a negative electrode positioned opposite the positive electrode, a separator interposed between the positive electrode and the negative electrode, and an electrolyte.

The negative electrode is as described above.

In addition, the lithium secondary battery may optionally further include a battery case accommodating an electrode assembly of the positive electrode, negative electrode, and separator, and a sealing member for sealing the battery case.

The positive electrode may include a positive electrode current collector and a positive electrode active material layer disposed on the positive electrode current collector, and the positive electrode active material layer may include a positive electrode active material.

The positive electrode current collector is not particularly limited as long as it possesses conductivity without causing chemical changes in the battery. Examples include stainless steel, aluminum, nickel, titanium, sintered carbon, or aluminum or stainless steel surface-treated with carbon, nickel, titanium, or silver.

The positive electrode current collector may typically have a thickness of 3 to 500 $\mu$m, and fine surface irregularities may be formed on the surface of the current collector to enhance adhesion of the positive electrode active material.

It may be used in various forms such as films, sheets, foils, nets, porous bodies, foams, or non-woven fabrics.

The positive electrode active material may be a compound capable of reversibly intercalating and deintercalating lithium (a lithiated intercalation compound).

More specifically, one or more composite oxides of lithium and a metal selected from cobalt, manganese, nickel, or combinations thereof may be used, and specific examples include compounds represented by any one of the following chemical formulas:

$Li_aA_{1-b}B_bD_2$(0.90 $\leq$ a $\leq$ 1.8, and 0 $\leq$ b $\leq$ 0.5); $Li_aE_{1-b}B_bO_{2-c}D_c$(0.90 $\leq$ a $\leq$ 1.8, 0 $\leq$ b $\leq$ 0.5, 0 $\leq$ c $\leq$ 0.05); $LiE_{2-b}B_bO_{4-c}D_c$(0 $\leq$ b $\leq$ 0.5, 0 $\leq$ c $\leq$ 0.05); $Li_aNi_{1-b-c}Co_bB_cD_\alpha$(0.90 $\leq$ a $\leq$ 1.8, 0 $\leq$ b $\leq$ 0.5, 0 $\leq$ c $\leq$ 0.05, 0 < $\alpha$ $\leq$ 2); $Li_aNi_{1-b-c}Co_bB_cO_{2-\alpha}T_\alpha$(0.90 $\leq$ a $\leq$ 1.8, 0 $\leq$ b $\leq$ 0.5, 0 $\leq$ c $\leq$ 0.05, 0 < $\alpha$ < 2); $Li_aNi_{1-b-c}Co_bB_cO_{2-\alpha}T_2$(0.90 $\leq$ a $\leq$ 1.8, 0 $\leq$ b $\leq$ 0.5, 0 $\leq$ c $\leq$ 0.05, 0 < $\alpha$ < 2); $Li_aNi_{1-b-c}Mn_bB_cD_\alpha$ (0.90 $\leq$ a $\leq$ 1.8, 0 $\leq$ b $\leq$ 0.5, 0 $\leq$ c $\leq$ 0.05, 0 < $\alpha$ $\leq$ 2); $Li_aNi_{1-b-c}Mn_bB_cO_{2-\alpha}T_\alpha$(0.90 $\leq$ a $\leq$ 1.8, 0 $\leq$ b $\leq$ 0.5, 0 $\leq$ c $\leq$ 0.05, 0 < $\alpha$ < 2); $Li_aNi_{1-b-c}Mn_bB_cO_{2-\alpha}T_2$(0.90 $\leq$ a $\leq$ 1.8, 0 $\leq$ b $\leq$ 0.5, 0 $\leq$ c $\leq$ 0.05, 0 < $\alpha$ < 2); $Li_aNi_bE_cG_dO_2$(0.90 $\leq$ a $\leq$ 1.8, 0 $\leq$ b $\leq$ 0.9, 0 $\leq$ c $\leq$ 0.5, 0.001 $\leq$ d $\leq$ 0.1.); $Li_aNi_bCo_cMn_dGeO_2$(0.90 $\leq$ a $\leq$ 1.8, 0 $\leq$ b $\leq$ 0.9, 0 $\leq$ c $\leq$ 0.5, 0 $\leq$ d $\leq$ 0.5, 0.001 $\leq$ e $\leq$ 0.1); $Li_aNiG_bO_2$(0.90 $\leq$ a $\leq$ 1.8, 0.001 $\leq$ b $\leq$ 0.1); $Li_aCoG_bO_2$(0.90 $\leq$ a $\leq$ 1.8, 0.001 $\leq$ b $\leq$ 0.1); $Li_aMnG_bO_2$(0.90 $\leq$ a $\leq$ 1.8, 0.001 $\leq$ b $\leq$ 0.1); $Li_aMn_2G_bO_4$ (0.90 $\leq$ a $\leq$ 1.8, 0.001 $\leq$ b $\leq$ 0.1); $QO_2$; $QS_2$; $LiQS_2$; $V_2O_5$; $LiV_2O_5$; $LiIO_2$; $LiNiVO_4$; $Li_{(3-f)}J_2(PO_4)_3$(0 $\leq$ f $\leq$ 2); $Li_{(3-f)}Fe_2(PO_4)_3$(0 $\leq$ f $\leq$ 2); and $LiFePO_4$.

In the above chemical formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Of course, a compound having a coating layer on its surface, or a mixture of the compound and a compound having a coating layer, may also be used.

The coating layer may include at least one coating-element compound selected from the group consisting of oxides of the coating element, hydroxides of the coating element, oxyhydroxides of the coating element, oxycarbonates of the coating element, and hydroxycarbonates of the coating element.

The compounds constituting the coating layer may be amorphous or crystalline.

Examples of coating elements that may be included in the coating layer include Mg, Al, Co, K, Na, Ca, Si, Ti, V, Sn, Ge, Ga, B, As, Zr, or mixtures thereof.

The coating layer may be formed by any coating method that uses such elements and does not adversely affect the physical properties of the positive electrode active material (e.g., spray coating, dipping), and the details of such coating processes are well known to those skilled in the art and will not be described further.

The positive electrode active material layer may further include a binder and/or a conductive material along with the aforementioned positive electrode active material.

The binder serves to improve adhesion between the positive electrode active material particles and adhesion between the positive electrode active material and the positive electrode current collector.

Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more of these may be used. The binder may be included in an amount of 1 to 30 wt% based on the total weight of the positive electrode active material layer.

The conductive material is used to impart conductivity to the electrode and may be used without particular limitation as long as it exhibits electronic conductivity without causing chemical changes in the assembled battery.

Specific examples include graphite such as natural or artificial graphite; carbon-based materials such as carbon black, acetylene black, ketjen black, channel black, furnace black, lamp black, thermal black, or carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives, and mixtures of one or more of these may be used.

The conductive material may typically be included in an amount of 1 to 30 wt% based on the total weight of the positive electrode active material layer.

The positive electrode may be manufactured according to a conventional method for preparing a positive electrode.

Specifically, the positive electrode may be manufactured by applying a composition for forming a positive electrode active material layer-which includes the positive electrode active material and, as necessary, a binder, conductive material, or solvent-onto the positive electrode current collector, followed by drying and rolling.

In this case, the types and contents of the positive electrode active material, binder, and conductive material are as described above.

The solvent may be one commonly used in the art, including dimethyl sulfoxide (DMSO), isopropyl alcohol, N-methylpyrrolidone (NMP), acetone, or water, and one or a mixture of two or more thereof may be used.

The amount of solvent used should be sufficient to dissolve or disperse the positive electrode active material, conductive material, and binder, taking into account the slurry coating thickness and manufacturing yield, and to provide a viscosity suitable for excellent coating uniformity during positive electrode fabrication.

Alternatively, the positive electrode may be manufactured by casting the composition for forming the positive electrode active material layer onto a separate support, peeling the resulting film from the support, and laminating the film onto the positive electrode current collector.

The separator separates the positive electrode and the negative electrode and provides a pathway for lithium-ion movement. Any separator commonly used in lithium secondary batteries may be employed without particular limitation, and it is preferable for the separator to exhibit low resistance to ion transport and excellent electrolyte wettability.

Specifically, porous polymer films may be used, such as polyolefin-based porous polymer films made of an ethylene homopolymer, a propylene homopolymer, an ethylene/butene copolymer, an ethylene/hexene copolymer, or an ethylene/methacrylate copolymer, or multilayer structures of two or more of these films.

In addition, conventional porous nonwoven fabrics, such as nonwoven fabrics made of high-melting point glass fibers or polyethylene terephthalate fibers, may also be used.

Furthermore, coated separators containing ceramic components or polymer materials may be used in order to ensure heat resistance or mechanical strength, and such separators may be used in a single-layer or multilayer structure.

The electrolyte may include an organic liquid electrolyte, an inorganic liquid electrolyte, a solid polymer electrolyte, a gel-type polymer electrolyte, a solid inorganic electrolyte, or a molten inorganic electrolyte, all of which may be used in manufacturing a lithium secondary battery, but are not limited thereto.

Specifically, the organic liquid electrolyte may include an organic solvent and a lithium salt.

The organic solvent may be used without particular limitation as long as it serves as a medium allowing ions involved in the electrochemical reaction of the battery to move.

Specific examples of the organic solvent include ester-based solvents such as methyl acetate, ethyl acetate, $\gamma$-butyrolactone, and $\varepsilon$-caprolactone; ether-based solvents such as dibutyl ether or tetrahydrofuran; ketone-based solvents such as cyclohexanone; aromatic hydrocarbon solvents such as benzene or fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol or isopropyl alcohol; nitriles such as R-CN (where R is a $C_2$-$C_{20}$ linear, branched, or cyclic hydrocarbon group, which may include a double-bonded aromatic or ether linkage); amides such as dimethylformamide; dioxolanes such as 1,3-dioxolane; or sulfolanes.

Among these, carbonate-based solvents are preferable, and a mixture of cyclic carbonates having high ionic conductivity and high dielectric constant (e.g., ethylene carbonate or propylene carbonate) and linear carbonate compounds having low viscosity (e.g., ethylmethyl carbonate, dimethyl carbonate, or diethyl carbonate) is more preferable.

In such a case, the cyclic carbonate and linear carbonate may be mixed at a volume ratio of about 1:1 to about 1:9 to exhibit excellent electrolyte performance.

The lithium salt may be any compound capable of providing lithium ions used in lithium secondary batteries.

Specific examples include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$.

The concentration of the lithium salt is preferably within the range of 0.1 to 2.0 M.

When the concentration of the lithium salt falls within this range, the electrolyte can exhibit excellent performance due to having appropriate conductivity and viscosity, and lithium ions can move effectively.

In addition to the above components, the electrolyte may further include one or more additives for improving battery lifespan characteristics, suppressing capacity degradation, or enhancing discharge capacity.

Examples include haloalkylene carbonate compounds such as difluoroethylene carbonate; pyridine; triethyl phosphate; triethanolamine; cyclic ethers; ethylenediamine; n-glyme; hexamethylphosphoramide; nitrobenzene derivatives; sulfur; quinone imine dyes; N-substituted oxazolidinones; N,N-substituted imidazolidines; ethylene glycol dialkyl ethers; ammonium salts; pyrrole; 2-methoxyethanol; or aluminum trichloride.

The additive may be included in an amount of 0.1 to 5 wt% based on the total weight of the electrolyte.

Example 1

(1) Preparation of Negative Electrode Active Material

(Natural graphite powder preparation) A primary-spheronized natural graphite powder having an average particle diameter (D50) of 16 $\mu$m was prepared.

(Oxidative treatment) Thereafter, the natural graphite powder was oxidatively treated in a continuous rotary kiln at 600°C for 3 hours under an air atmosphere.

(High-density spheronization) Subsequently, the oxidatively treated natural graphite powder was subjected to high-density spheronization in a spheronizer at 1000 rpm for 25 minutes, and fine particles and coarse particles were removed through air classification and sieving.

(Coating) The high-density spheronized natural graphite powder was then mixed with petroleum pitch at a weight ratio of 100:8, followed by mechanical mixing at 2000 rpm for 10 minutes using a high-speed stirrer to form a uniform mixture.

The mixture was placed into a chamber and heat-treated at 1200°C for 5 hours under a nitrogen atmosphere, and then sieved through a 75 $\mu$m sieve to obtain natural graphite having a coating layer formed thereon.

## (2) Fabrication of Negative Electrode

The prepared negative electrode active material, a conductive material, a binder (styrene-butadiene rubber, SBR), and a thickener (carboxymethyl cellulose, CMC) were mixed at a mass ratio of 96.6:1:1.3:1.1, respectively, and dispersed in deionized water to prepare a composition for forming a negative electrode active material layer.

The composition was applied onto a Cu-foil current collector, and the coating was dried and rolled to manufacture negative electrodes having an electrode density of $1.50 \pm 0.05$ g/cm$^3$ and $1.70 \pm 0.05$ g/cm$^3$.

## (3) Fabrication of Lithium Secondary Battery

A coin-type 2032 half-cell was fabricated using the above negative electrode as the working electrode and metallic lithium as the counter electrode.

A porous polypropylene film was inserted as the separator between the working electrode and the counter electrode.

As the electrolyte, a solution was used in which LiPF$_6$ at a concentration of 1 M was dissolved in a mixed solvent of diethyl carbonate (DEC) and ethylene carbonate (EC) having a volume ratio of 7:3.

## Example 2

Example 2 was carried out in the same manner as Example 1, except that the petroleum pitch was mixed with the natural graphite powder at a weight ratio of 100:8.8.

A negative electrode active material, negative electrode, and lithium secondary battery were thus prepared.

## Comparative Example 1

Comparative Example 1 was carried out in the same manner as Example 1, except that the high-density spheronization and coating steps were not performed.

A negative electrode active material, negative electrode, and lithium secondary battery were thus prepared.

## Comparative Example 2

Comparative Example 2 was carried out in the same manner as Example 1, except that the high-density spheronization step was not performed.

A negative electrode active material, negative electrode, and lithium secondary battery were thus prepared.

**Comparative Example 3**

Comparative Example 3 was carried out in the same manner as Example 1, except that the oxidative treatment step was not performed.

A negative electrode active material, negative electrode, and lithium secondary battery were thus prepared.

**Comparative Example 4**

Comparative Example 4 was carried out in the same manner as Example 1, except that neither the oxidative treatment step nor the high-density spheronization step was performed.

A negative electrode active material, negative electrode, and lithium secondary battery were thus prepared.

The following Table 1 summarizes the preparation processes of the negative electrode active materials of the Examples and Comparative Examples.

[Table 1]

|  | Oxidative Treatment | High-Density Spheronization | Coating |
|---|---|---|---|
| Example 1 | ○ | ○ | ○ |
| Example 2 | ○ | ○ | ○ |
| Comparative Example 1 | ○ | - | - |
| Comparative Example 2 | ○ | - | ○ |
| Comparative Example 3 | - | ○ | ○ |
| Comparative Example 4 | - | - | ○ |

**Experimental Example 1: Evaluation of Physical Properties of the Active Material**

The physical properties of the negative electrode active materials prepared according to the Examples and Comparative Examples were evaluated as described below, and the results are shown in Tables 2 and 3.

**(1) Evaluation of Particle Size (D10, D50, D90, Dmax) and SPAN Value**

For the active material powder, particle sizes (D10, D50, D90, Dmax) and the SPAN value were determined using a laser diffraction method.

The SPAN value was calculated by [D90 - D10] / D50.

Dmax, D90, D10, and D50 were each defined as particle diameters corresponding to 100%, 90%, 10%, and 50% of the cumulative volume in the particle size distribution curve.

**(2) Evaluation of Specific Surface Area**

For the active material powder, specific surface area was measured using the BET method (Surface Area and Porosity Analyzer, Micromeritics ASAP2020).

**(3) Evaluation of Tap Density**

According to ASTM B527, 15 g of the active material powder was placed in a 50 mL container and tapped at 3000 cycles @ 284 cycles/min, and the packing density was measured.

**(4) Evaluation of Orientation**

In the XRD pattern obtained from X-ray diffraction, the orientation was calculated by the integrated peak area ratio ($I_{110}/I_{004}$) of the XRD spectra corresponding to the (110) plane and the (004) plane of graphite crystals.

More specifically, the XRD measurement conditions were as follows:

- Target: Cu (Kα line), graphite monochromator
- Slits: Divergence slit = 1°, Receiving slit = 0.1 mm, Scattering slit = 1°
- Measurement ranges and step angle / measurement time:

  - (110) plane: 76.5° < 2θ < 78.5°, 0.1° / 4.2 s
  - (004) plane: 53.5° < 2θ < 56.0°, 0.1° / 4.2 s

where 2θ denotes the diffraction angle.

**(5) Evaluation of Sphericity**

Sphericity was evaluated by dividing the circumference of a circle having the same projected area as the particle image by the actual perimeter of the projected particle image, using a flow-type particle analyzer.
An optical image acquisition analyzer (Fluid Imaging Technologies, FlowCam 8100) and analysis software (Visual Spreadsheet) were used.

**(6) Evaluation of Pellet Density According to Applied Pressure and Evaluation of Equations 1 to 4**

For the active material powder, pellet density as a function of applied pressure was measured.

[Table 2]

|  | D10 (μm) | D50 (μm) | D90 (μm) | Dmax (μm) | Span | Specific Surface Area ($m^2$/g) | Tap Density (g/cc) | Orientation Ratio ($I_{110}/I_{004}$) | Sphericity |
|---|---|---|---|---|---|---|---|---|---|
| Exam ple 1 | 6.2 | 16.7 | 27 | 62 | 1.25 | 1.9 | 1.16 | 0.517 | 0.92 |
| Exam ple 2 | 6.3 | 17.4 | 28 | 62 | 1.25 | 1.8 | 1.17 | 0.646 | 0.92 |
| Comp arative Exam ple 1 | 11.1 | 19.8 | 35 | 74 | 1.21 | 5.2 | 0.82 | 0.155 | 0.91 |
| Comp arative Exam ple 2 | 10.7 | 18.3 | 61.7 | 62.3 | 2.8 | 1.8 | 0.99 | 0.339 | 0.91 |
| Comp arativ e Exam ple 3 | 10.6 | 17 | 26 | 52.3 | 0.91 | 1.7 | 1.18 | 0.601 | 0.94 |
| Comp arativ e Exam ple 4 | 10.3 | 18.1 | 52.1 | 52.2 | 2.31 | 1.8 | 1.05 | 0.434 | 0.87 |

[Table 3]

| Pellet Densit | Applied Pressure (kg·f/$cm^2$) | | | | | Equation 1 | Equation 2 | Equation 3 | Equati on 4 |
|---|---|---|---|---|---|---|---|---|---|
|  | 1.3 g/cc | 1.4 g/cc | 1.5 g/cc | 1.6 g/cc | 1.7 g/cc | | | | |
| y | | | | | | | | | |
| Examp le 1 | 298 | 597 | 895 | 1195 | 1595 | 1297 | 897 | 597 | 299 |
| Examp le 2 | 295 | 597 | 895 | 1195 | 1595 | 1300 | 900 | 600 | 302 |
| Compa rative Examp le 1 | 100 | 165 | 255 | 355 | 498 | 398 | 255 | 155 | 65 |
| Compa rative Examp le 2 | 250 | 397 | 598 | 895 | 1095 | 845 | 645 | 348 | 147 |
| Compa rative Examp le 3 | 200 | 400 | 700 | 1005 | 1310 | 1110 | 805 | 500 | 200 |
| Compa rative Examp le 4 | 220 | 397 | 655 | 845 | 1195 | 975 | 625 | 435 | 177 |

Referring to Tables 2 and 3, in the cases of Examples 1 and 2, in which both the oxidative treatment and the high-density spheronization processes were performed, it was confirmed that the orientation and sphericity were excellent and that the tap density was high.

In addition, the values of Equations 1 to 4 were all high, confirming that the particle rigidity was excellent.

In contrast, in Comparative Examples 1, 2, and 4, in which the high-density spheronization process was not performed, it was confirmed that the orientation was inferior and the sphericity was lower.

Furthermore, because the values of Equations 1 to 4 were small, the particle rigidity was shown to be inferior.

Meanwhile, in the case of Comparative Example 3, in which the high-density spheronization process was performed but the oxidative treatment process was not performed, it was confirmed that the orientation, sphericity, and tap density were comparable to those of the Examples; however, the values of Equations 1 to 4 did not reach the level of the Examples, indicating that the particle rigidity was somewhat inferior.

**Experimental Example 2: Evaluation of Electrochemical Characteristics of Lithium Secondary Batteries**

The electrochemical characteristics of the lithium secondary batteries manufactured according to the Examples and Comparative Examples were evaluated, and the results are shown in Table 4 below.

**(1) Evaluation of Charging Output Characteristics (SOC 10% $\rightarrow$ 80%)**

The manufactured lithium secondary batteries were charged at 25°C under a constant-current/constant-voltage (CC/CV) condition at 0.1C to 4.2 V / 0.005C, and then discharged at 0.1C to 2.5 V under a constant-current (CC) condition to complete the formation process.

After being charged to 10% of the cell capacity (SOC 10%) at a 0.1C-rate, the cells were subsequently charged under constant-current/constant-voltage (CC/CV) conditions at various Crates (2.0C, 2.5C, 3.0C, 3.5C, 4.0C, 4.5C, 5.0C, 6.0C), and the time required to reach 80% of the cell capacity (SOC 80%) was measured.

**(2) Evaluation of Lifespan Characteristics (3C / 0.5C)**

The manufactured lithium secondary batteries were charged at 25°C under a constant-current/constant-voltage (CC/CV) condition at 0.1C to 4.2 V / 0.005C, and then discharged at 0.1C to 2.5 V under a constant-current (CC) condition to complete the formation process.

Thereafter, the cells were charged under constant-current/constant-voltage (CC/CV) conditions at a 3C-rate to 4.2 V / 0.005C and then discharged at 0.5C to 2.5 V under a constant-current (CC) condition, and the discharge capacity retention of the 100th cycle was measured.

[Table 4]

| | Charging Time (SOC 10% $\rightarrow$ SOC 80%) (min) | | | | | Cycle retention (%, 3C, 100cycle) |
|---|---|---|---|---|---|---|
| | 2C | 3C | 4C | 5C | 6C | |
| Example 1 | 21 | 14.5 | 12.4 | 11.6 | 11.3 | 93.20% |
| Example 2 | 21 | 14.6 | 12.3 | 11.8 | 11.2 | 92.10% |
| Comparative Example 1 | 22.1 | 17 | 15.8 | 15.4 | 15.2 | 91.50% |
| Comparative Example 2 | 21.3 | 15.7 | 14.1 | 13.6 | 13.5 | 91.00% |
| Comparative Example 3 | 21.2 | 15.1 | 13 | 12.3 | 12.1 | 82.60% |
| Comparative Example 4 | 21.8 | 20.6 | 20 | 20.5 | 21.9 | 74.10% |

Referring to Table 4, in the cases of Examples 1 and 2, in which the values of Equation 1 and the like for the negative electrode active material were sufficiently large, it was confirmed that both the charging output characteristics at high rates of 2C or higher and the lifespan characteristics were remarkably excellent.

In contrast, in the cases of Comparative Examples 1 to 4, in which the values of Equation 1 and the like for the negative electrode active material were small, it was confirmed that the charging output characteristics and lifespan characteristics were inferior compared to the Examples.

Although the preferred embodiments of the present invention have been described above, the present invention is not limited thereto, and various modifications and changes may be made within the scope of the appended claims, the detailed description of the invention, and the accompanying drawings. Therefore, the substantial scope of the present invention shall be defined by the appended claims and equivalents thereof.

**Claims**

1. A negative electrode active material for a lithium secondary battery, comprising natural graphite,

   wherein the natural graphite satisfies the following Equation 1:

   [Equation 1]

   $$P_{1.7} - P_{1.3} \geq 1200 \text{ kg·f/cm}^2,$$

   wherein $P_{1.7}$ is an applied pressure at which the pellet density of the negative electrode active material becomes 1.7 g/cc, and $P_{1.3}$ is an applied pressure at which the pellet density of the negative electrode active material becomes 1.3 g/cc.

2. The negative electrode active material of claim 1,

   wherein the natural graphite satisfies the following Equation 2:

   [Equation 2]

   $$P_{1.6} - P_{1.3} \geq 850 \text{ kg·f/cm}^2,$$

   wherein $P_{1.6}$ is an applied pressure at which the pellet density of the negative electrode active material becomes 1.6 g/cc, and $P_{1.3}$ is an applied pressure at which the pellet density of the negative electrode active material becomes 1.3 g/cc.

3. The negative electrode active material of claim 1,

   wherein the natural graphite satisfies the following Equation 3:

   [Equation 3]

   $$P_{1.5} - P_{1.3} \geq 550 \text{ kg·f/cm}^2,$$

   wherein $P_{1.5}$ is an applied pressure at which the pellet density of the negative electrode active material becomes 1.5 g/cc, and $P_{1.3}$ is an applied pressure at which the pellet density of the negative electrode active material becomes 1.3 g/cc.

4. The negative electrode active material of claim 1,

   wherein the natural graphite satisfies the following Equation 4:

   [Equation 4]

   $$P_{1.4} - P_{1.3} \geq 250 \text{ kg·f/cm}^2,$$

   wherein $P_{1.4}$ is an applied pressure at which the pellet density of the negative electrode active material becomes 1.4 g/cc, and $P_{1.3}$ is an applied pressure at which the pellet density of the negative electrode active material becomes 1.3 g/cc.

5. The negative electrode active material of claim 1,

wherein the natural graphite has an orientation peak intensity ratio ($I_{110}/I_{004}$) of 0.50 or greater in an XRD pattern analysis.

6. The negative electrode active material of claim 1,
   wherein the natural graphite has a sphericity of 0.85 or greater.

7. The negative electrode active material of claim 1,
   wherein the natural graphite is oxidatively treated.

8. The negative electrode active material of claim 1,
   further comprising a coating layer disposed on the natural graphite and including a low-crystallinity carbon material.

9. The negative electrode active material of claim 8,
   wherein the coating layer is included in an amount of 1 to 20 wt% based on the total weight of the natural graphite.

10. The negative electrode active material of claim 1,
    wherein the tap density is 1.1 g/cm$^3$ or greater.

11. The negative electrode active material of claim 1,
    wherein a SPAN value is from 1 to 1.5.

12. The negative electrode active material of claim 1,
    wherein an average particle diameter (D50) is from 12 to 20 $\mu$m.

13. A method for manufacturing a negative electrode active material for a lithium secondary battery, comprising:

    preparing a natural graphite powder;
    oxidatively treating the natural graphite powder; and
    performing high-density spheronization of the oxidatively treated natural graphite powder.

14. The method of claim 13,
    wherein the oxidative treatment is performed at a temperature of 500°C to 700°C.

15. The method of claim 13,
    wherein the oxidative treatment is performed for 1 to 5 hours.

16. The method of claim 13,
    wherein the oxidative treatment is performed in an air or oxygen atmosphere.

17. The method of claim 13,

    further comprising, after the high-density spheronization of the oxidatively treated natural graphite powder, mixing a precursor of a low-crystallinity carbon material and then performing heat treatment to form a coating layer containing the low-crystallinity carbon material.

18. A negative electrode for a lithium secondary battery, comprising the negative electrode active material of any one of claims 1 to 12.

19. A lithium secondary battery comprising the negative electrode of claim 18.

## INTERNATIONAL SEARCH REPORT

| International application No. |
| --- |
| **PCT/KR2024/007026** |

| A. | CLASSIFICATION OF SUBJECT MATTER |
| --- | --- |

**H01M 4/583**(2010.01)i; **H01M 4/36**(2006.01)i; **C01B 32/21**(2017.01)i; **H01M 4/133**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/583(2010.01); H01M 4/133(2010.01); H01M 4/36(2006.01); H01M 4/587(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질 (anode active material), 이차전지 (secondary battery), 천연 흑연 (natural carbon), 펠렛 밀도 (pellet density), 압력 (pressure), 산화 (oxidation)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2014-0140952 A (POSCO CHEMTECH CO., LTD.) 10 December 2014 (2014-12-10)<br>See abstract; paragraphs [0051]-[0054], [0066] and [0115]-[0117]; and claim 1. | 13-17 |
| A | | 1-12,18,19 |
| X | JP 2010-251126 A (MITSUBISHI CHEMICALS CORP.) 04 November 2010 (2010-11-04)<br>See paragraph [0141]. | 13-16 |
| A | US 2021-0083288 A1 (HITACHI CHEMICAL COMPANY, LTD.) 18 March 2021 (2021-03-18)<br>See abstract; table 1; and claims 1-9. | 1-19 |
| A | KR 10-2001-0080071 A (SHOWA DENKO K.K.) 22 August 2001 (2001-08-22)<br>See abstract; and claims 1-33. | 1-19 |
| A | JP 2019-175775 A (MITSUBISHI CHEMICAL HOLDINGS CORP.) 10 October 2019 (2019-10-10)<br>See abstract; and claims 1-11. | 1-19 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 September 2024** | **04 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/007026**

| Patent document cited in search report | | | Publication date (day/month/year) | Patent family member(s) | | | Publication date (day/month/year) |
|---|---|---|---|---|---|---|---|
| KR | 10-2014-0140952 | A | 10 December 2014 | None | | | |
| JP | 2010-251126 | A | 04 November 2010 | None | | | |
| US | 2021-0083288 | A1 | 18 March 2021 | EP | 3780182 | A1 | 17 February 2021 |
| | | | | EP | 3780182 | A4 | 17 March 2021 |
| | | | | JP | 7238884 | B2 | 14 March 2023 |
| | | | | TW | 201943131 | A | 01 November 2019 |
| | | | | WO | 2019-186829 | A1 | 03 October 2019 |
| KR | 10-2001-0080071 | A | 22 August 2001 | CA | 2346752 | A1 | 20 April 2000 |
| | | | | CA | 2346752 | C | 17 August 2010 |
| | | | | CA | 2694838 | A1 | 20 April 2000 |
| | | | | CN | 1184709 | C | 12 January 2005 |
| | | | | CN | 1320284 | A | 31 October 2001 |
| | | | | EP | 1122803 | A1 | 08 August 2001 |
| | | | | EP | 1122803 | A4 | 13 April 2005 |
| | | | | JP | 4393712 | B2 | 06 January 2010 |
| | | | | KR | 10-0450348 | B1 | 30 September 2004 |
| | | | | TW | 442995 | B | 23 June 2001 |
| | | | | US | 6989137 | B1 | 24 January 2006 |
| | | | | WO | 00-22687 | A1 | 20 April 2000 |
| JP | 2019-175775 | A | 10 October 2019 | None | | | |

Form PCT/ISA/210 (patent family annex) (July 2022)